# EUROPÄISCHE PATENTSCHRIFT

(11) **EP 1 791 739 B1**
(45) Veröffentlichungstag und Bekanntmachung des Hinweises auf die Patenterteilung: **16.03.2011**
(21) Anmeldenummer: 05786899.4
(22) Anmeldetag: 20.09.2005
(51) Int. Cl.: B60T 8/32, B60T 17/22, B60T 13/66, B60T 8/00

(54) **VERFAHREN ZUM UNTERSTÜTZEN EINES BREMSENSYSTEMS BEI VERMINDERTER WIRKSAMKEIT DER FAHRZEUGBREMSANLAGE**
METHOD FOR SUPPORTING A BRAKE SYSTEM IN CASE OF REDUCED EFFECTIVENESS OF THE VEHICLE BRAKE SYSTEM
PROCEDE POUR ASSISTER UN DISPOSITIF DE FREINAGE EN CAS DE BAISSE D'EFFICACITE DU SYSTEME DE FREINAGE DU VEHICULE

(30) Priorität: 24.09.2004 DE 102004046378
(43) Veröffentlichungstag der Anmeldung: 06.06.2007
(73) Patentinhaber: Continental Teves AG & Co. oHG, 60488 Frankfurt am Main (DE)
(72) Erfinder: UMMER, Bernd, 65812 Bad Soden (DE); ESSLINGER, Holger, 55232 Alzey (DE)
(86) Internationale Anmeldenummer: PCT/EP2005/054687
(87) Internationale Veröffentlichungsnummer: WO 2006/032659

(56) Entgegenhaltungen:
- DE-A1- 10 238 427
- US-A- 5 727 852
- US-B1- 6 226 586

## Beschreibung

Die Erfindung betrifft ein Verfahren zum Erhöhen der Bremswirkung bei einem Kraftfahrzeug mit einer hydraulischen Bremsanlage, bei dem eine Energieversorgungseinheit, mittels derer der Bremsdruck in wenigstens einer Radbremse erhöht wird, eingeschaltet wird, wenn der von dem Fahrer in einem Hauptbremszylinder eingestellte Bremsdruck eine in Abhängigkeit von einer ermittelten Fahrzeugverzögerung bestimmte erste Aktivierungsschwelle überschreitet, und die Energieversorgungseinheit ausgeschaltet wird, wenn der Bremsdruck zu einem Zeitpunkt einen vorgegebenen unteren Schwellenwert erreicht.

Die Erfindung betrifft zudem eine zur Durchführung des Verfahrens geeignete Vorrichtung.

Die hydraulischen Bremsen eines Fahrzeugs weisen bei hoher thermischer Belastung, bei einem Einfluss von Salzlösung und bei starkem Verschleiß eine eingeschränkte Wirksamkeit auf, so dass die Bremsanlage selbst bei einem hohen durch den Fahrer eingestellten Vordruck innerhalb des Hauptbremszylinders der Bremsanlage keine ausreichende Verzögerung des Fahrzeugs bewirkt. Die Verringerung der Bremswirkung bei hohen Betriebstemperaturen der Bremsanlage wird dabei auch als Fading bezeichnet.

In den oben dargestellten Fällen resultiert die verminderte Bremswirkung der Fahrzeugbremsanlage jedoch insbesondere aus einem verminderten Reibungskoeffizienten zwischen den Bremsbelägen und der Bremsscheibe, so dass ein besonderer Bremsdruck erforderlich ist, um das Fahrzeug wirkungsvoll abzubremsen.

Aus der deutschen Offenlegungsschrift DE 102 38 427 A1 ist hierzu bereits ein Verfahren der eingangs genannten Art bekannt, bei dem im Falle einer eingeschränkten Wirksamkeit der Fahrzeugbremse durch das Zuschalten einer Energiequelle der Bremsdruck bzw. die Bremskraft in den Radbremsen erhöht wird, indem Hydraulikflüssigkeit aus dem Hauptbremszylinder in die Radbremsen gepumpt wird. Ein derartiges Verfahren wird auch als FBS-Funktion (FBS: Fading Brake Support) bezeichnet.

Die Aktivierung der Energiequelle, bei der es sich üblicherweise um eine Pumpe handelt, erfolgt bei der FBS-Funktion dann, wenn der durch den Fahrer eingestellte Vordruck im Hauptbremszylinder eine Aktivierungsschwelle übersteigt, die in Abhängigkeit der Fahrzeugverzögerung ermittelt wird. Die Pumpe wird somit eingeschaltet, wenn die tatsächliche Fahrzeugverzögerung die aufgrund des eingestellten Vordrucks erwartete Fahrzeugverzögerung um einen bestimmten Wert unterschreitet.

Die Pumpe wird üblicherweise abgeschaltet, wenn der Vordruck in dem Hauptbremszylinder unter einen vorgegebenen Schwellenwert fällt. Dies basiert darauf, dass der Bremswunsch des Fahrers anhand des Vordrucks ermittelt wird. Somit wird bei einem sinkenden Bremsdruck davon ausgegangen, dass der Fahrer die Bremse löst.

Bei eingeschalteter Energiequelle sinkt der Vordruck innerhalb des Hauptbremszylinders jedoch auch, ohne dass der Fahrer die Bremse löst, da Hydraulikflüssigkeit durch die Pumpe aus dem Hauptbremszylinder abgesaugt wird.

Nach dem Abschalten der Energiequelle strömt Hydraulikflüssigkeit zurück in den Hauptbremszylinder und der Vordruck steigt wieder an. Überschreitet er dabei erneut die Aktivierungsschwelle, wird die FBS-Funktion wieder aktiviert.

Während eines Bremsvorgangs kommt es somit zu einer sich zyklisch wiederholenden Abfolge des Aktivierens und Deaktivierens der FBS-Funktion, wobei die Frequenz, in der sich die Zyklen wiederholen, durch den periodischen zeitlichen Verlauf des Vordrucks bestimmt wird.

Es wurde jedoch festgestellt, dass dabei in der Regel sehr lange Phasen mit deaktivierter FBS-Funktion auftreten, in denen die Bremsanlage nur die verringerte Wirksamkeit entfaltet. Hierdurch wird das Ziel, den Bremsweg eines Fahrzeugs im Falle einer eingeschränkten Wirksamkeit der Bremsanlage zu verkürzen, nur teilweise erreicht.

Ferner kann es bei sehr hohen Betriebstemperaturen der Bremsanlage aufgrund einer Überhitzung der Bremsflüssigkeit zu einem Druckabfall in der Bremsanlage kommen, der zur Folge haben kann, dass die Aktivierungsschwelle der FBS-Funktion nach dem Abschalten der Energiequelle nicht wieder erreicht wird. Trotz extrem verminderter Bremswirkung erfolgt dann keine Unterstützung des Bremsvorgangs durch die FBS-Funktion mehr und der Bremsweg des Fahrzeugs verlängert sich erheblich.

Ein weiterer Grund für den erhöhten Volumenbedarf bzw. Druckabfall in der Bremsanlage ist, dass die Bremsbeläge bei hohen Temperaturen "weich" werden und somit ein sehr geringer Reibungskoeffizient zwischen den Belägen und der Bremsscheibe vorliegt.

Es ist daher eine Aufgabe der vorliegenden Erfindung, die Wirksamkeit der FBS-Funktion zu verbessern und damit den Bremsweg des Fahrzeugs zu verkürzen.

Erfindungsgemäß wird diese Aufgabe durch ein Verfahren mit den Merkmalen des Patentanspruchs 1 sowie durch eine Vorrichtung mit den Merkmalen des Patentanspruchs 7 gelöst.

Nach der Erfindung ist es vorgesehen, dass ein Verfahren der eingangs genannten Art so durchgeführt wird, dass innerhalb eines zu dem Zeitpunkt beginnenden Zeitintervalls anhand eines Vergleichs zwischen dem Bremsdruck und einer gegenüber der ersten Aktivierungsschwelle verringerten, zweiten Aktivierungsschwelle und/oder anhand eines Vergleichs zwischen einem Bremsdruckgradienten und einem vorgegebenen Schwellenwert überprüft wird, ob der Bremsdruck erneut ansteigt, und dass die Energieversorgungseinheit erneut angeschaltet wird, wenn ein erneuter Anstieg des Bremsdrucks festgestellt worden ist.

Die Erfindung basiert somit auf der Idee, die FBS-Funktion nach einem Druckabfall bereits dann wieder zu aktivieren, wenn ein erneuter Druckanstieg festgestellt wird, und nicht erst dann, wenn der Druck erneut die erste Aktivierungsschwelle erreicht. Hierdurch wird die FBS-Funktion rascher wieder aktiviert, so dass die während eines Bremsvorgangs bestehenden Phasen mit deaktivierter FBS-Funktion verkürzt werden und damit die Bremswirkung der Bremsanlage erhöht wird.

Mit besonderem Vorteil wird die FBS-Funktion bei dem erfindungsgemäßen Verfahren zudem auch dann wieder aktiviert, wenn der Bremsdruck nach der vorgehenden Deaktivierung aufgrund eines Druckabfalls in der Bremsanlage nur in geringem Maße ansteigt.

Zur Erkennung des Wiederanstiegs des Bremsdrucks ist es bei der Erfindung vorteilhaft vorgesehen, dass ein Vergleich zwischen dem Bremsdruck und einer zweiten, gegenüber der ersten Aktivierungsschwelle reduzierten Aktivierungsschwelle und/oder ein Vergleich zwischen dem Bremsdruckgradienten und einem vorgegebenen Schwellenwert vorgenommen wird.

In einer besonders zweckmäßigen Ausführungsform der Erfindung ist es dabei vorgesehen, dass die Energieversorgungseinheit erneut eingeschaltet wird, wenn der Bremsdruck die zweite Aktivierungsschwelle überschreitet.

In einer weiteren besonders zweckmäßigen Ausführungsform der Erfindung ist es zudem vorgesehen, dass die Energieversorgungseinheit erneut eingeschaltet wird, wenn der Bremsdruckgradient den vorgegebenen Schwellenwert überschreitet.

Ferner erfolgt ein Einschalten der Energieversorgungseinheit bei einer vorteilhaften Ausgestaltung der Erfindung wieder nach Maßgabe der ersten Aktivierungsschwelle, wenn innerhalb des vorgegebenen Zeitintervalls nach einem Abfall des Bremsdrucks unter einen vorgegebenen Schwellenwert kein erneuter Anstieg des Bremsdrucks festgestellt wird.

Auf diese Weise wird zu Beginn eines nachfolgenden Bremsvorgangs wieder die erste, in Abhängigkeit von der Fahrzeugverzögerung berechnete Akvierungsschwelle für die Aktivierung der FBS-Funktion zugrunde gelegt, d.h., bei einem nachfolgenden Bremsvorgang wird die FBS-Funktion nur dann aktiviert, wenn eine verminderte Wirksamkeit der Bremsanlage festgestellt wird.

In einer weiteren vorteilhaften Ausgestaltung der Erfindung handelt es sich bei der Energieversorgungseinheit um eine durch einen Motor angetriebene Pumpe.

Vorzugsweise ist die Energieversorgungseinheit dabei Bestandteil eines ESP-Systems.

Ein weiterer Gegenstand der Erfindung ist eine Vorrichtung zum Erhöhen der Bremswirkung einer hydraulischen Bremsanlage eines Kraftfahrzeugs, umfassend einen Hauptbremszylinder, in dem ein auf wenigstens eine Radbremse übertragbarer Bremsdruck aufbaubar ist, einen Drucksensor, mit dem der Bremsdruck in dem Hauptbremszylinder erfassbar ist, ein mit dem Drucksensor verbundenes Steuergerät und eine durch das Steuergerät steuerbare Energieversorgungseinheit, die einschaltbar ist, wenn innerhalb des Steuergeräts erkannt wird, dass der Bremsdruck innerhalb des Hauptbremszylinders eine in Abhängigkeit von der Fahrzeugverzögerung berechnete erste Aktivierungsschwelle überschreitet, und die abschaltbar ist, wenn der Bremsdruck zu einem Zeitpunkt einen unteren Schwellenwert erreicht.

Die Vorrichtung zeichnet sich dadurch aus, dass ein Zähler innerhalb des Steuergerätes zu diesem Zeitpunkt aktivierbar und bei einem vorgegebenen Zählerstand deaktivierbar ist, und dass bei laufendem Zähler innerhalb des Steuergerätes ein Vergleich zwischen dem Bremsdruck in dem Hauptbremszylinder und einer zweiten, gegenüber der ersten Aktivierungsschwelle verringerten Aktivierungsschwelle und/oder ein Vergleich zwischen einem aus den Signalen des Drucksensors ermittelten Bremsdruckgradienten und einem vorgegebenen Schwellenwert durchführbar ist, wobei die Energieversorgungseinheit bei laufendem Zähler aktivierbar ist, wenn einer der Vergleiche ergibt, dass der Bremsdruck die zweite Aktivierungsschwelle überschreitet und/oder der Bremsdruckgradient den vorgegebenen Schwellenwert überschreitet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele der Erfindung anhand der Figuren.

Von den Figuren zeigt
- Fig. 1: den prinzipiellen Aufbau einer zur Ausführung der Er- findung geeigneten Fahrzeugbremsanlage
- Fig. 2: ein Diagramm, in dem der zeitliche Verlauf des Brems- drucks in einer Radbremse und dem Hauptbremszylinder, die Aktivierungsschwelle der FBS-Funktion und die Ak- tivität der FBS-Funktion nach dem Stand der Technik dargestellt sind, und
- Fig. 3: ein Diagramm, in dem der zeitliche Verlauf des Brems- drucks in einer Radbremse und dem Hauptbremszylinder, die Aktivierungsschwelle der FBS-Funktion und die Ak- tivität der FBS-Funktion nach der Erfindung darge- stellt sind.

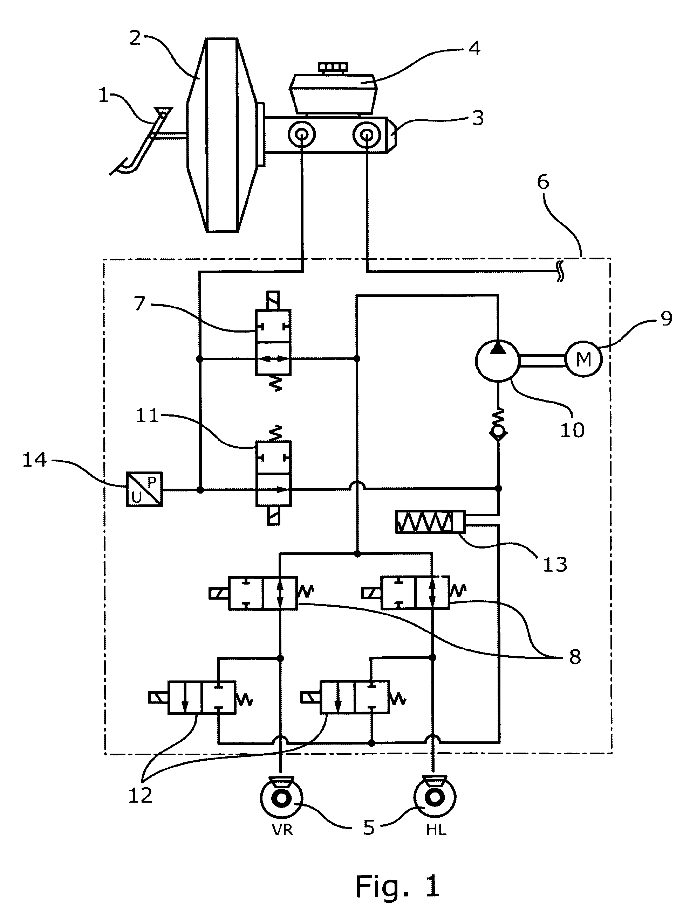

Die in der Figur 1 in einem Ausschnitt dargestellte, zur Ausführung der Erfindung geeignete Fahrzeugbremsanlage umfasst eine Betätigungseinrichtung 1, die über einen Bremskraftverstärker 2 mit einem Hauptbremszylinder 3 verbunden ist und vorzugsweise als Bremspedal ausgebildet ist.

Der Hauptbremszylinder 3 ist strömungsmäßig mit einem Vorratsbehälter 4 für Hydraulikflüssigkeit verbunden. Er ist vorzugsweise als so genannter Tandemhauptzylinder ausgeführt, bei dem jeweils eine von zwei gekoppelten Druckkammern zur Druckversorgung eines Bremskreises vorgesehen ist. Üblicherweise besteht dabei eine X-Aufteilung der Bremskreise, bei der eine Druckkammer die vordere rechte (VR) und die hintere linke (HL) Radbremse 5 versorgt und die andere Druckkammer die vordere linke und die hintere rechte Radbremse 5.

Mit den Radbremsen 5 ist der Hauptbremszylinder 3 über eine Hydraulikeinheit 6 verbunden, die für jeden der beiden Bremskreise in gleicher Weise ausgebildet ist. In der Figur 1 ist daher nur der einem der Bremskreise zugeordnete Teil der Hydraulikeinheit dargestellt.

Die Radbremsen 5 sind dabei über ein stromlos offenes Trennventil 7 mit dem Hauptbremszylinder 3 verbunden, wobei jeder Radbremse 5 zusätzlich ein Einlassventil 8 zugeordnet ist, das ebenfalls stromlos geöffnet ist. Bei einem ausschließlich durch den Fahrer gesteuerten Bremsvorgang wird der von dem Fahrer mittels des Bremskraftverstärkers 2 in dem Hauptbremszylinder 3 aufgebaute Bremsdruck p_{THZ}, der auch als Vordruck bezeichnet wird, direkt zu den Radbremsen 5 übertragen.

Die dargestellte Bremskraftanlage ermöglicht jedoch ebenfalls einen fremdkraftgesteuerten Aufbau eines Bremsdrucks in den Radbremsen 5 mittels der durch den Motor 9 angetriebenen Hydraulikpumpe 10. Zum Druckaufbau wird dabei das Trennventil 7 geschlossen und das stromlos geschlossene Umschaltventil 11 geöffnet, so dass zwischen dem Hauptbremszylinder 3 und der Saugseite der Hydraulikpumpe 10 eine Verbindung entsteht, und der Hauptbremszylinder 3 von der Druckseite der Hydraulikpumpe 10 entkoppelt wird. Die Hydraulikpumpe 10 ist damit in der Lage, Hydraulikflüssigkeit aus dem Hauptbremszylinder 3 bzw. dem Vorratsbehälter 4 in die Radbremsen 5 zu fördern, um den Radbremsdruck zu erhöhen.

Zur Verringerung des Bremsdrucks in den Radbremsen 5 ist jeder Radbremse 5 ein stromlos geschlossenes Auslassventil 12 zugeordnet. Wird das Auslassventil 12 geöffnet, kann Hydraulikflüssigkeit aus der entsprechenden Radbremse 7 mit hoher Dynamik in den Niederdruckspeicher 13 entweichen. Mittels der Hydraulikpumpe 10 kann die Hydraulikflüssigkeit aus dem Niederdruckspeicher 13 dann in den Hauptbremszylinder 3 zurückgefördert werden, wozu das Umschaltventil 11 sowie die Einlassventile 8 geschlossen und das Trennventil 7 geöffnet wird.

Darüber hinaus kann ein in den Radbremsen 5 vorhandener Bremsdruck konstant gehalten werden, indem sowohl das der Radbremse zugeordnete Einlassventil 8 als auch das zugehörige Auslassventil 12 geschlossen werden.

Der von dem Fahrer innerhalb des Hauptbremszylinders 3 eingestellte Bremsdruck p_{THZ} wird mittels eines Drucksensors 14 gemessen, dessen Signale einem Steuergerät übermittelt werden, welches die Steuerung der Hydraulikeinheit 6 bzw. der enthaltenen Ventile 7, 8, 11 und 12 und des Motors 9 vornimmt.

In der dargestellten Weise ausgeführte Bremsanlagen sind ebenfalls Bestandteil von ESP-Systemen, die bereits in einer Vielzahl von Fahrzeugen eingesetzt werden und dem Fachmann grundsätzlich bekannt sind. Mit solchen Bremsanlagen lässt sich dabei auch eine FBS-Funktion realisieren, die Ausgangspunkt der vorliegenden Erfindung ist.

Bei der FBS-Funktion ist es vorgesehen, dass die Radbremsen 5 mittels der Hydraulikpumpe 10 mit einem gegenüber der Fahrervorgabe erhöhten Bremsdruck beaufschlagt werden, wenn während eines Bremsvorgangs eine verminderte Wirksamkeit der Bremsanlage festgestellt wird.

Dies entspricht der Aktivierung eines so genannten Bremsassistenten (BA) im Falle einer verminderten Wirksamkeit der Bremsanlage, dessen Funktion darin besteht den Bremsdruck in den Radbremsen 5 gegenüber dem Bremsdruck p_{THZ} zu erhöhen und der insbesondere auch in Notbremssituationen aktiviert wird.

Zur Aktivierung der FBS-Funktion wird in Abhängigkeit von der mittels eines Längsbeschleunigungssensors gemessenen und/oder aus den Signalen von Raddrehzahlsensoren ermittelten Fahrzeugverzögerung während eines Bremsvorgangs eine Aktivierungsschwelle p_{TH} für den Bremsdruck p_{THZ} innerhalb des Hauptbremszylinders 3 berechnet, wie es detailliert in der deutschen Offenlegungsschrift DE 102 38 427 A1 beschrieben wird, auf die hiermit im Zusammenhang mit der FBS-Funktion Bezug genommen wird.

Überschreitet der von dem Fahrer innerhalb des Hauptbremszylinders 3 eingestellte Bremsdruck p_{THZ} die Aktivierungsschwelle p_{TH}, so wird der Bremsassistent aktiviert. Vorzugsweise ist der Bremsassistent dabei als so genannter hydraulischer Bremsassistent (HBA) ausgeführt, bei dem die Druckerhöhung mittels der Hydraulikeinheit 6, d.h. insbesondere mittels der durch den Motor 9 angetriebenen Hydraulikpumpe 10 vorgenommen wird, wozu der Motor 9 und die Ventile 7, 11 in der entsprechenden Weise von dem Steuergerät angesteuert werden (d.h. das Trennventil 7 geschlossen und das Umschaltventil 11 geöffnet wird.)

Der Bremsassistent wird deaktiviert, wenn der Bremsdruck p_{THZ} innerhalb des Hauptbremszylinders 3 bei aktivierter FBS-Funktion einen vorgegebenen Schwellenwert unterschreitet. Dies basiert darauf, dass der Bremswunsch des Fahrers von dem Steuergerät 8 anhand des mittels des Drucksensors 14 gemessenen Bremsdrucks p_{THZ} ermittelt wird. Dabei wird bei einem sinkenden Bremsdruck p_{THZ} davon ausgegangen, dass der Fahrer die Bremse löst.

Bei eingeschalteter Hydraulikpumpe 10 sinkt der Bremsdruck p_{THZ} innerhalb des Hauptbremszylinders 3 jedoch auch, ohne dass der Fahrer die Bremse löst, da Hydraulikflüssigkeit durch die Hydraulikpumpe 10 aus dem Hauptbremszylinder 3 abgesaugt wird.

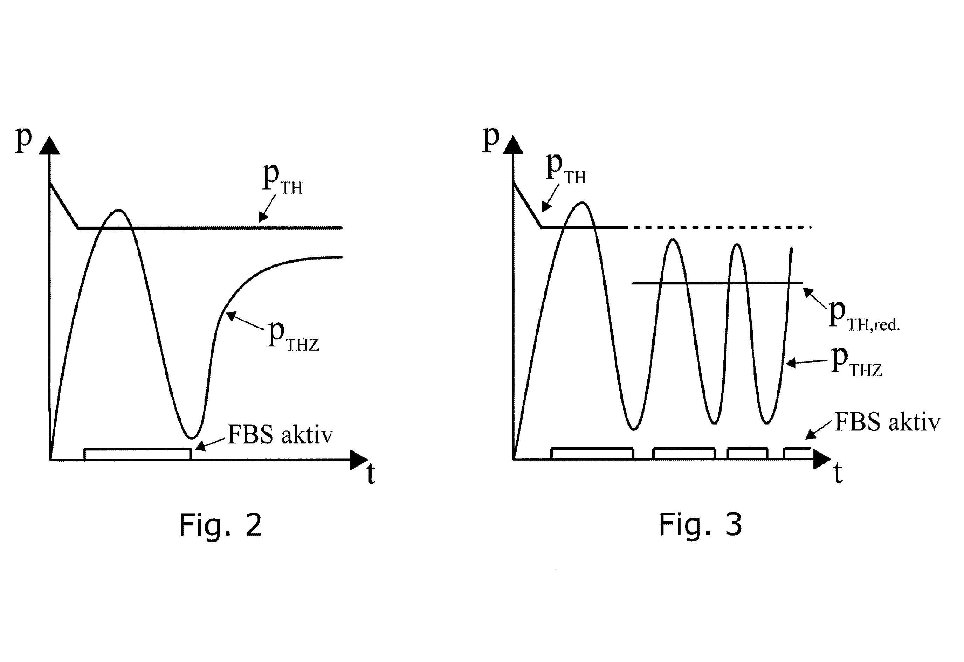

In dem Diagramm in der Figur 2 sind die zeitlichen Verläufe des Bremsdrucks p_{THZ} innerhalb des Hauptbremszylinders 3 sowie die Aktivierungsschwelle p_{TH}, die sich bei der bekannten FBS-Funktion ergeben, dargestellt. Ferner wird veranschaulicht, in welchen Zeiträumen die FBS-Funktion aktiv bzw. die Hydraulikpumpe 10 angeschaltet ist (FBS aktiv).

In Figur 2 ist erkennbar, dass die Aktivierung erfolgt, sobald der Bremsdruck p_{THZ} die Aktivierungsschwelle p_{TH} überschreitet. In der Folge wird in den Radbremsen 5 ein Bremsdruck aufgebaut, der gegenüber dem von dem Fahrer eingestellten Bremsdruck p_{THZ} erhöht ist. Dies geschieht dadurch, dass mittels der Hydraulikpumpe 10 bei geschlossenem Trennventil 7 und geöffnetem Umschaltventil 11 Hydraulikflüssigkeit aus dem Hauptbremszylinder 3 in die Radbremsen 5 gefördert wird.

Hierdurch verringert sich dann der Bremsdruck p_{THZ} innerhalb des Hauptbremszylinders 3. Wenn der Bremsdruck einen vorgegebenen unteren Schwellenwert erreicht, der in der Figur 2 nicht veranschaulicht ist, wird die Hydraulikpumpe 10 ausgeschaltet, das Umschaltventil 11 geschlossen und das Trennventil 7 geöffnet. Hierdurch kann Hydraulikflüssigkeit aus den Radbremsen 5 in den Hauptbremszylinder 3 zurückströmen, wodurch sich der Bremsdruck p_{THZ} in dem Hauptbremszylinder 3 wieder erhöht.

Setzt der Fahrer die Betätigung des Bremspedals fort, kann der Bremsdruck p_{THZ} dabei erneut die Aktivierungsschwelle p_{TH} erreichen, so dass die FBS-Funktion erneut aktiviert wird. Hierdurch ergibt sich eine zyklische Abfolge, die wiederholt wird, bis der Fahrer das Bremspedal löst, sodass die FBS-Funktion während eines Bremsvorgangs abwechselnd aktiviert und deaktiviert wird, wobei die Frequenz durch den periodischen zeitlichen Verlauf des Bremsdrucks p_{THZ} innerhalb des Hauptbremszylinders 3 gegeben ist.

Bei sehr hohen Temperaturen an den Radbremsen 5, die beispielsweise aufgrund eines fortwährenden oder nur mit kurzen Unterbrechungen erfolgenden Bremsens bei Passabfahrten entstehen können, steigt der Bremsdruck p_{THZ} zwar nach dem Abbruch des FBS-Eingriffs erneut an, erreicht jedoch oftmals nicht mehr die Aktivierungsschwelle p_{TH}. Eine solche Situation ist in dem Diagramm in der Figur 2 dargestellt.

Der Grund hierfür ist, dass der Bremsdruck innerhalb der Bremsanlage bei sehr hohen Temperaturen absinkt, da sich kompressible Gaseinlagerungen in der ansonsten inkompressiblen Hydraulikflüssigkeit bilden, bei denen es sich insbesondere um Wasserdampfblasen handelt, die beim Verdampfen der in der Hydraulikflüssigkeit enthaltenen Wasseranteile entstehen. Weiterhin besteht ein erhöhter Volumenbedarf in der Bremsanlage, da die Bremsbeläge bei hohen Temperaturen "weich" werden und somit ein sehr geringer Reibungskoeffizient zwischen den Belägen und der Bremsscheibe vorliegt.

Im Rahmen der Erfindung ist es nun vorgesehen, dass die FBS-Funktion bereits bei einem geringeren Wiederanstieg des Bremsdrucks p_{THZ} in dem Hauptbremszylinder 3 erneut aktiviert wird.

Die Aktivierung der FBS-Funktion umfasst dabei insbesondere das Einschalten der Hydraulikpumpe 10 bzw. des Motors 9, das Schließen des Trennventils 7 sowie das Öffnen des Umschaltventils 11, was im Folgenden jedoch nicht mehr explizit beschrieben wird. Entsprechend wird beim Abbruch eines FBS-Eingriffs, d.h. bei der Deaktivierung der FBS-Funktion, insbesondere die Hydraulikpumpe 10 bzw. der Motor 9 ausgeschaltet, das Trennventil 7 geöffnet und das Umschaltventil 11 geschlossen, was im Folgenden ebenfalls nicht mehr explizit beschrieben wird.

Zur Ausführung der Erfindung ist es vorgesehen, dass während eines vorgegebenen Zeitintervalls, das beginnt, wenn der Bremsdruck p_{THZ} bei einem ersten FBS-Eingriff den unteren Schwellenwert erreicht hat bzw. die Hydraulikpumpe 10 abgeschaltet wird, eine reduzierte Aktivierungsschwelle p_{TH, red} für die erneute Aktivierung der FBS-Funktion zugrunde gelegt wird.

Wenn der Bremsdruck p_{THZ} innerhalb des Hauptbremszylinders 3 den unteren Schwellenwert erreicht, wird dazu ein Zähler innerhalb des Steuergerätes, ausgehend von dem Anfangswert 0, in Gang gesetzt, mit dem das vorgegebene Zeitintervall gemessen wird.

Während dieses Zeitintervalls, d.h. bevor mittels des Zählers der Ablauf des Zeitintervalls festgestellt worden ist, wird der Bremsdruck p_{THZ} innerhalb des Hauptbremszylinders 3 durch das Steuergerät mit der reduzierten Aktivierungsschwelle p_{TH,red} (anstelle der ursprünglichen Aktivierungsschwelle p_{TH}) verglichen, und die FBS-Funktion wird aktiviert, wenn der Wert des Bremsdrucks p_{THZ} den Wert der reduzierten Aktivierungsschwelle p_{TH, red} überschreitet.

Fällt der Bremsdruck p_{THZ} nachfolgend bei aktivierter FBS-Funktion erneut unter den unteren Schwellenwert, so dass der FBS-Eingriff wieder beendet wird, wird der Zähler erneut auf den Wert 0 gesetzt und ausgehend von diesem Wert gestartet.

Bei einem erneuten Wiederanstieg des Bremsdrucks p_{THZ} innerhalb des Hauptbremszylinders 3 während des vorgegebenen, durch den Zähler gemessenen Zeitraums, wird dann wiederum die reduzierte Aktivierungsschwelle p_{TH},_{red} für die Aktivierung der FBS-Funktion zugrunde gelegt.

In dem Diagramm in der Figur 3, das den zeitlichen Verlauf des Bremsdrucks p_{THZ} innerhalb des Hauptbremszylinders 3, den Aktivierungsschwellenwert p_{TH}, die reduzierten Aktivierungsschwelle p_{TH},_{red} sowie die Zeiträume zeigt, in denen die FBS-Funktion aktiviert ist (FBS aktiv), ist dieses Vorgehen veranschaulicht.

Dabei ist in der Figur 3 insbesondere zu erkennen, dass für die erstmalige Aktivierung der FBS-Funktion bei einem Bremsvorgang der Wert der anhand der Fahrzeugverzögerung berechneten Aktivierungsschwelle p_{TH} maßgeblich ist, während bei den nachfolgenden Druckanstiegen aufgrund des bei deaktivierter FBS-Funktion erfolgenden Rückflusses von Hydraulikflüssigkeit in den Hauptbremszylinder 3, der Wert der reduzierten Aktivierungsschwelle p_{TH},_{red} für die Aktivierung der FBS-Funktion zugrunde gelegt wird.

Auf diese Weise erfolgt insbesondere auch dann eine erneute Aktivierung der FBS-Funktion, wenn der Bremsdruck p_{THZ} die ursprüngliche Aktivierungsschwelle p_{TH} während des Bremsvorgangs nicht mehr erreicht, wie Figur 3 zeigt.

Neben der zuvor dargestellten Möglichkeit, einen Wiederanstieg des Bremsdrucks p_{THZ} anhand der reduzierten Aktivierungsschwelle p_{TH},_{red} zu erkennen, umfasst die Erfindung ergänzend oder alternativ eine weitere Möglichkeit, den Wiederanstieg des Bremsdrucks innerhalb des Hauptbremszylinders 3 festzustellen.

Dabei ist es vorgesehen, dass während des vorgegebenen Zeitintervalls nach dem Unterschreiten des unteren Druckschwellenwertes ein Vergleich zwischen der als Bremsdruckgradient bezeichneten Änderungsrate des Bremsdrucks p_{THZ} innerhalb des Hauptbremszylinders 3 und einem vorgegebenen Schwellenwert durchgeführt wird, um einen Wiederanstieg des Bremsdrucks p_{THZ} zu erkennen. Der Bremsdruckgradient kann dabei aus den Signalen des Drucksensors 14 ermittelt werden.

Eine erneute Aktivierung der FBS-Funktion nach einem zuvor erfolgten Druckabfall in dem Hauptbremszylinder 3 und einem daraus resultierenden Abbruch des FBS-Eingriffs geschieht dabei dann, wenn der Bremsdruckgradient den vorgegebenen Schwellenwert überschreitet.

Dabei ist es ebenfalls vorgesehen, dass der das vorgegebenen Zeitintervall abmessende Zähler immer dann auf den Wert 0 zurückgesetzt wird, wenn der Bremsdruck p_{THZ} bei aktivierter FBS-Funktion den unteren Schwellenwert erreicht, sodass bei jedem Wiederanstieg des Bremsdrucks p_{THZ} während eines Bremsvorgangs eine Auswertung des Bremsdruckgradienten und ein schnelles Wiedereinschalten der Hydraulikpumpe 10 erfolgen.

Anhand der Auswertung des Bremsdruckgradienten kann ein Wiederanstieg des Bremsdrucks p_{THZ} innerhalb des Hauptbremszylinders 3 besonders rasch festgestellt und somit auch besonders rasch eine erneute Aktivierung der FBS-Funktion vorgenommen werden.

Bei beiden dargestellten erfindungsgemäßen Möglichkeiten zum Erkennen eins Wiederanstiegs des Drucks p_{THZ} in dem Hauptbremszylinder 3 ist es vorgesehen, dass nach dem Ablauf des vorgegebenen Zeitintervalls, d.h. beim Erreichen eines vorgegebenen Zählerwertes, wieder die ursprünglich, in Abhängigkeit der Fahrzeugverzögerung ermittelte Aktivierungsschwelle p_{TH} für die Aktivierung der FBS-Funktion zugrunde gelegt wird.

Bleibt eine anhand der zuvor beschriebenen Kriterien festgestellte Druckerhöhung innerhalb des Hauptbremszylinders 3 während des vorgegebenen Zeitintervalls aus, ist davon auszugehen, dass der Fahrer die Bremse gelöst und den Bremsvorgang beendet hat.

Ein erneuter Druckanstieg erfolgt dann erst bei einer erneuten Bremsenbetätigung, die der Fahrer zur Einleitung eines weiteren Bremsvorgangs vornimmt. Hierbei ist die anhand der Fahrzeugverzögerung berechnete Aktivierungsschwelle p_{TH} maßgeblich für die erstmalige Aktivierung der FBS-Funktion, so dass FBS-Eingriffe nur dann vorgenommen werden, wenn eine verminderte Wirksamkeit der Bremsanlage des Fahrzeugs festgestellt wird.

### Bezugszeichenliste:

- 1: Betätigungseinrichtung
- 2: Bremskraftverstärker
- 3: Hauptbremszylinder
- 4: Vorratsbehälter
- 5: Radbremse
- 6: Hydraulikeinheit
- 7: Trennventil
- 8: Einlassventil
- 9: Motor
- 10: Hydraulikpumpe
- 11: Umschaltventil
- 12: Auslassventil
- 13: Niederdruckspeicher
- 14: Drucksensor

- p: Druck
- p_{TH}: Aktivierungsschwelle
- p_{TH,red}: reduzierte Aktivierungsschwelle
- p_{THZ}: Bremsdruck in dem Hauptbremszylinder
- t: Zeit

## Patentansprüche

1. Verfahren zum Erhöhen der Bremswirkung bei einem Kraftfahrzeug mit einer hydraulischen Bremsanlage, bei dem eine Energieversorgungseinheit, mittels derer der Bremsdruck in wenigstens einer Radbremse erhöht wird, eingeschaltet wird, wenn der von dem Fahrer in einem Hauptbremszylinder eingestellte Bremsdruck eine in Abhängigkeit von einer ermittelten Fahrzeugverzögerung bestimmte erste Aktivierungsschwelle überschreitet, und die Energieversorgungseinheit ausgeschaltet wird, wenn der Bremsdruck zu einem Zeitpunkt einen vorgegebenen unteren Schwellenwert erreicht, **dadurch gekennzeichnet, dass** innerhalb eines zu dem Zeitpunkt beginnenden Zeitintervalls anhand eines Vergleichs zwischen dem Bremsdruck und einer gegenüber der ersten Aktivierungsschwelle (p_{TH}) verringerten, zweiten Aktivierungsschwelle (p_{TH},_{red}) und/oder anhand eines Vergleichs zwischen einem Bremsdruckgradienten und einem vorgegebenen Schwellenwert überprüft wird, ob der Bremsdruck (p_{THZ}) erneut ansteigt, und dass die Energieversorgungseinheit (9, 10) erneut angeschaltet wird, wenn ein erneuter Anstieg des Bremsdrucks (p_{THZ}) festgestellt worden ist.

2. Verfahren nach Anspruch 1, **dadurch gekennzeichnet, dass** die Energieversorgungseinheit (9, 10) erneut eingeschaltet wird, wenn der Bremsdruck (p_{THZ}) die zweite Aktivierungsschwelle **(p_{TH},** _{red}) überschreitet.

3. Verfahren nach einem der Ansprüche 1 und 2, **dadurch gekennzeichnet, dass** die Energievorsorgungseinheit (9, 10) erneut eingeschaltet wird, wenn der Bremsdruckgradient den vorgegebenen Schwellenwert überschreitet.

4. Verfahren nach einem der vorangegangenen Ansprüche, **dadurch gekennzeichnet, dass** ein Einschalten der Energieversorgungseinheit (9, 10) nach Maßgabe der ersten Aktivierungsschwelle (p_{TH}) erfolgt, wenn innerhalb des vorgegebenen Zeitintervalls nach einem Abfall des Bremsdrucks (p_{THZ}) unter den vorgegebenen Schwellenwert kein erneuter Anstieg des Bremsdrucks festgestellt wird.

5. Verfahren nach einem der vorangegangenen Ansprüche, **dadurch gekennzeichnet, dass** es sich bei der Energieversorgungseinheit (9, 10) um eine durch einen Motor (9) angetriebene Pumpe (10) handelt.

6. Verfahren nach einem der vorangegangenen Ansprüche, **dadurch gekennzeichnet, dass** die Energieversorgungseinheit (9, 10) Bestandteil eines ESP-Systems ist.

7. Vorrichtung zum Erhöhen der Bremswirkung einer hydraulischen Bremsanlage eines Kraftfahrzeugs, umfassend einen Hauptbremszylinder, in dem ein auf wenigstens eine Radbremse übertragbarer Bremsdruck aufbaubar ist, einen Drucksensor, mit dem der Bremsdruck in dem Hauptbremszylinder erfassbar ist, ein mit dem Drucksensor verbundenes Steuergerät und eine durch das Steuergerät steuerbare Energieversorgungseinheit, die einschaltbar ist, wenn innerhalb des Steuergeräts erkannt wird, dass der Bremsdruck innerhalb des Hauptbremszylinders eine in Abhängigkeit von der Fahrzeugverzögerung berechnete erste Aktivierungsschwelle überschreitet, und die abschaltbar ist, wenn der Bremsdruck zu einem Zeitpunkt einen unteren Schwellenwert erreicht, **dadurch gekennzeichnet, dass** ein Zähler innerhalb des Steuergerätes zu diesem Zeitpunkt aktivierbar und bei einem vorgegebenen Zählerstand deaktivierbar ist, und dass bei laufendem Zähler innerhalb des Steuergerätes ein Vergleich zwischen dem Bremsdruck (p_{THZ}) in dem Hauptbremszylinder (3) und einer zweiten, gegenüber der ersten Aktivierungsschwelle (p_{THZ}) verringerten Aktivierungsschwelle (p_{TH, red}) und/oder ein Vergleich zwischen einem aus den Signalen des Drucksensors (14) ermittelten Bremsdruckgradienten und einem vorgegebenen Schwellenwert durchführbar ist, wobei die Energieversorgungseinheit (9, 10) bei laufendem Zähler aktivierbar ist, wenn einer der Vergleiche ergibt, dass der Bremsdruck (p_{THZ}) die zweite Aktivierungsschwelle überschreitet und/oder der Bremsdruckgradient den vorgegebenen Schwellenwert überschreitet.

## Claims

1. Method for increasing the braking action in a motor vehicle having a hydraulic brake system, in which method an energy supply unit which serves to increase the brake pressure in at least one wheel brake is activated if the brake pressure set by the driver in a master brake cylinder exceeds a first activation threshold defined by a determined vehicle deceleration, and the energy supply unit is deactivated if the brake pressure reaches a predefined lower threshold at a time, **characterized in that**, within a time interval beginning at the time, on the basis of a comparison between the brake pressure and a second activation threshold (p_{TH},_{red}) which is lower than the first activation threshold (p_{TH}), and/or on the basis of a comparison between a brake pressure gradient and a predefined threshold value, it is checked whether the brake pressure (p_{THZ}) increases again, and **in that** the energy supply unit (9, 10) is activated again if a renewed increase in the brake pressure (p_{TH}) has been detected.

2. Method according to Claim 1, **characterized in that** the energy supply unit (9, 10) is activated again if the brake pressure (p_{THZ}) exceeds the second activation threshold (p_{TH,red}).

3. Method according to either of Claims 1 and 2, **characterized in that** the energy supply unit (9, 10) is activated again if the brake pressure gradient exceeds the predefined threshold value.

4. Method according to one of the preceding claims, **characterized in that** an activation of the energy supply unit (9, 10) on the basis of the first activation threshold (p_{TH}) takes place if, within the predefined time interval, no renewed increase in the brake pressure is detected after a drop in the brake pressure (p_{THZ}) below the predefined threshold value.

5. Method according to one of the preceding claims, **characterized in that** the energy supply unit (9, 10) is a pump (10) which is driven by a motor (9).

6. Method according to one of the preceding claims, **characterized in that** the energy supply unit (9, 10) is a constituent part of an ESP system.

7. A device for increasing the braking action of a hydraulic brake system of a motor vehicle, comprising a master brake cylinder in which can be built up a brake pressure which can be transmitted to at least one wheel brake, a pressure sensor by means of which the brake pressure in the master brake cylinder can be measured, a control unit which is connected to the pressure sensor, and an energy supply unit which can be controlled by means of the control unit, which energy supply unit can be activated if it is detected within the control unit that the brake pressure within the master brake cylinder exceeds a first activation threshold calculated as a function of the vehicle deceleration, and which energy supply unit can be deactivated if the brake pressure reaches a lower threshold value at a time, **characterized in that** a counter within the control unit can be activated at said time and can be deactivated upon reaching a predefined counter value, and **in that**, while the counter is running, within the control unit, a comparison can be made between the brake pressure (p_{THZ}) in the master brake cylinder (3) and a second activation threshold (p_{TH},_{red}) which is lower than the first activation threshold (p_{THZ}), and/or a comparison can be made between a brake pressure gradient determined from the signals of the pressure sensor (14) and a predefined threshold value, with it being possible for the energy supply unit (9, 10) to be activated while the counter is running if one of the comparisons yields that the brake pressure (p_{THZ}) exceeds the second activation threshold and/or the brake pressure gradient exceeds the predefined threshold value.

## Revendications

1. Procédé pour accroître l'effet de freinage sur un véhicule automobile muni d'un équipement de freinage hydraulique, selon lequel une unité d'alimentation en énergie, au moyen de laquelle la pression de freinage est augmentée dans au moins un frein de roue, est mise en marche lorsque la pression de freinage réglée par le conducteur dans un maître-cylindre de frein dépasse un premier seuil d'activation, défini en fonction d'un ralentissement déterminé du véhicule, et l'unité d'alimentation en énergie est mise hors circuit lorsque la pression de freinage atteint à un instant donné une valeur de seuil inférieure prédéfinie, **caractérisé en ce que**, pendant un intervalle de temps qui commence à l'instant donné, un contrôle est effectué au moyen d'une comparaison entre la pression de freinage et un deuxième seuil d'activation (p_{TH}, _{red}), réduit par rapport au premier seuil d'activation (p_{TH}), et/ou d'une comparaison entre un gradient de la pression de freinage et une valeur de seuil prédéfinie pour vérifier si la pression de freinage (p_{THZ}) augmente de nouveau, et **en ce que** l'unité d'alimentation en énergie (9, 10) est de nouveau mise en circuit lorsqu'un nouvel accroissement de la pression de freinage (p_{THZ}) a été constaté.

2. Procédé selon la revendication 1, **caractérisé en ce que** l'unité d'alimentation en énergie (9, 10) est de nouveau mise en marche lorsque la pression de freinage (p_{THZ}) dépasse le deuxième seuil d'activation (p_{TH}, _{red}).

3. Procédé selon l'une des revendications 1 et 2, **caractérisé en ce que** l'unité d'alimentation en énergie (9, 10) est de nouveau mise en marche lorsque le gradient de la pression de freinage dépasse la valeur de seuil prédéfinie.

4. Procédé selon l'une des revendications précédentes, **caractérisé en ce qu'**une mise en marche de l'unité d'alimentation en énergie (9, 10) est effectuée en fonction du premier seuil d'activation (p_{TH}) lorsqu'aucun nouvel accroissement de la pression de freinage n'est constaté pendant l'intervalle de temps prédéfini après une chute de la pression de freinage (p_{THZ}) au-dessous de la valeur de seuil prédéfinie.

5. Procédé selon l'une des revendications précédentes, **caractérisé en ce que** l'unité d'alimentation en énergie (9, 10) est une pompe (10) entraînée par un moteur (9).

6. Procédé selon l'une des revendications précédentes, **caractérisé en ce que** l'unité d'alimentation en énergie (9, 10) fait partie intégrante d'un système ESP.

7. Dispositif pour accroître l'effet de freinage d'un équipement de freinage hydraulique d'un véhicule automobile, comprenant un maître-cylindre de frein dans lequel peut être établie une pression de freinage pouvant être transmise à au moins un frein de roue, un capteur de pression avec lequel la pression de freinage dans le maître-cylindre de frein peut être détectée, un contrôleur relié avec le capteur de pression et une unité d'alimentation en énergie qui peut être commandée par le contrôleur, laquelle peut être mise en marche lorsque le contrôleur détecte que la pression de freinage à l'intérieur du maître-cylindre de frein dépasse un premier seuil d'activation calculé en fonction du ralentissement du véhicule et peut être mise hors circuit lorsque la pression de freinage atteint à un instant donné une valeur de seuil inférieure, **caractérisé en ce qu'**un compteur peut être activé à cet instant à l'intérieur du contrôleur et peut être désactivé lorsque le compteur atteint une valeur prédéfinie et **en ce que**, pendant que le compteur tourne, une comparaison peut être effectuée à l'intérieur du contrôleur entre la pression de freinage (p_{THZ}) dans le maître-cylindre de frein (3) et un deuxième seuil d'activation (P_{TH}, _{red}), réduit par rapport au premier seuil d'activation (p_{TH}), et/ou entre un gradient de la pression de freinage déterminé à partir des signaux du capteur de pression (14) et une valeur de seuil prédéfinie, l'unité d'alimentation en énergie (9, 10) pouvant être activée pendant que le compteur tourne, lorsque le résultat de l'une des comparaisons est que la pression de freinage (p_{THZ}) dépasse le deuxième seuil d'activation et/ou que le gradient de la pression de freinage dépasse la valeur de seuil prédéfinie.
